# EUROPÄISCHE PATENTSCHRIFT

(11) **EP 1 069 310 B1**
(45) Veröffentlichungstag und Bekanntmachung des Hinweises auf die Patenterteilung: **22.09.2004**
(21) Anmeldenummer: 00114601.8
(22) Anmeldetag: 07.07.2000
(51) Int. Cl.: F02N 11/04, F02N 11/00

(54) **Antriebsvorrichtung**
Drive device
Dispositif d'entraînement

(30) Priorität: 12.07.1999 DE 19931963
(43) Veröffentlichungstag der Anmeldung: 17.01.2001
(73) Patentinhaber: AUDI AG, 85045 Ingolstadt (DE)
(72) Erfinder: Wolf, Norbert, 85055 Ingolstadt (DE); Revermann, Klaus, 38165 Lehre/Gr. Bruchsrode (DE); Märkl, Johann, 85128 Nassenfels (DE); Rennert, Ingo, 38539 Müden/Aller (DE)

(56) Entgegenhaltungen:
- EP-A- 0 916 546
- WO-A-92/00452
- WO-A-98/01669
- DE-A- 19 704 153
- US-A- 5 773 904

## Beschreibung

Die vorliegende Erfindung betrifft eine Antriebsvorrichtung mit einem Antriebsaggregat und mit einer elektrischen Maschine nach dem Oberbegriff des Anspruches 1.

Als nächstliegender Stand der Technik ist eine Antriebsvorrichtung bekannt (DE 197 04 153 A) mit einem Antriebsaggregat und mit einer elektrischen Maschine, welche mindestens einen Stator und mindestens einen auf einer durch das Antriebsaggregat verlaufenden Antriebswelle angeordneten Rotor umfasst, wobei die elektrische Maschine an der Antriebswelle auf der der Abtriebsseite gegenüberliegenden Seite des Antriebsaggregats angeordnet ist.

Zudem sind bei einem ähnlichen System Ausgestaltungen der Kopplung zwischen der elektrischen Maschine und der Antriebswelle bekannt (EP-A-0916546).

Aufgabe der Erfindung ist es eine Antriebsvorrichtung nach dem nächstliegenden Stand der Technik so weiterzubilden, dass bei kompaktem Aufbau auf einfache Weise durch die elektrische Maschine eine mechanische Einheit antreibbar ist.

Diese Aufgabe wird mit den Merkmalen des Anspruchs 1 gelöst.

Gemäß Anspruch 1 ist die elektrische Maschine in der Außenläufer-Variante ausgestaltet, so dass der Rotor der elektrischen Maschine außen um den Stator herum drehbar ist, und dass der Rotor an seiner Außenseite Drehmomentübertragungsmittel, beispielsweise eine Verzahnung zur Übertragung seines Drehmoments auf eine mechanisch anzutreibende Einheit aufweist.

Damit ergibt sich ein kostengünstiger, funktionssicherer direkter Antrieb der Einheit in Verbindung mit einer sehr kompakten, platzsparenden Anordnung.

In einer besonders bevorzugten Ausführung nach Anspruch 2 ist das Antriebsaggregat ein Verbrennungsmotor eines Kraftfahrzeuges und die Antriebswelle eine Kurbelwelle des Verbrennungsmotors ist und die mechanisch anzutreibende Einheit ist eine Klimakompressoreneinheit. Für diesen Fall ist insbesondere auch eine Standklimatisierung möglich.

Besonders geeignet ist die vorstehende Anordnung in Verbindung mit einer elektrischen Maschine als Starter/Generator-Einheit gemäß Anspruch 3 und einer Steuereinrichtung gemäß Anspruch 4.

Die Erfindung wird anhand einer Zeichnung näher erläutert.

Die einzige Figur zeigt in schematischer Darstellung eine Ausführungsform der Erfindung.

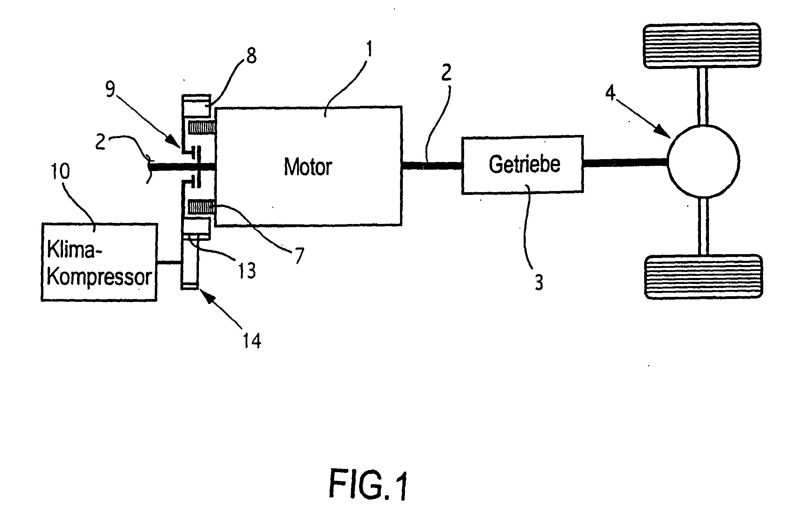

In Fig. 1 ist ein Verbrennungsmotor 1 eines Kraftfahrzeuges dargestellt, über dessen von den Kolben des Verbrennungsmotors 1 angetriebene Kurbelwelle 2 ein Drehmoment über eine Getriebekupplung (bzw. bei einem Automatikgetriebe über einen Wandler) auf die Getriebeeingangswelle eines Schalt- oder Automatikgetriebes 3 zum Antrieb der am Fahrwerk 4 des Kraftfahrzeugs angebrachten Räder übertragen wird.

Auf der dem Getriebe 3 gegenüberliegenden Seite des Verbrennungsmotors 1 ist eine elektrische Maschine angeordnet. Diese elektrische Maschine dient als Starter/Generator-Einheit und ermöglicht einerseits einen einfachen Start des Verbrennungsmotors 1 und andererseits eine hohe Generatorleistung, um nach dem Starten des Verbrennungsmotors 1 Energie für bestimmte Verbraucher des Kraftfahrzeugs bereitzustellen. Zu diesem Zweck umfasst die elektrische Maschine einen mit der Kurbelwelle 2 gekoppelten Rotor 8, welcher außerhalb einer oder mehrerer Statorwicklungen 7 drehbar angeordnet ist.

Die elektrische Maschine 8 kann beispielsweise in Form einer 42V-Asynchronmaschine ausgestaltet sein. Ebenso ist auch die Ausgestaltung in Form einer Synchronmaschine möglich. Im Motorbetrieb übernimmt die elektrische Maschine bei Betätigen des Anlasserschlüssels die Funktion eines Anlassers zum Starten des Verbrennungsmotors 1. Hierzu wird den Statorwicklungen 7 über eine nicht dargestellte Leistungs- und Steuerelektronikeinheit eine entsprechende Energie von der Fahrzeugbatterie zugeführt, so dass der Rotor 8 mit einem Anlaufdrehmoment beaufschlagt wird, welches das Starten des Verbrennungsmotors 1 ermöglicht. Nach dem Starten des Verbrennungsmotors 1 befindet sich die elektrische Maschine im Generatorbetrieb, wobei der Rotor 8 über die Kurbelwelle 2 des Verbrennungsmotors 1 in Rotation versetzt und somit in den Statorwicklungen 7 eine Spannung induziert wird, welche zur Energieversorgung von verschiedenen Verbrauchern des Kraftfahrzeuges dient. So wird u. a. die von dem Stator 7 gelieferte Spannung bzw. der entsprechende Drehstrom in eine Versorgungsgleichspannung für das Bordnetz bzw. die daran angeschlossenen Verbraucher des Kraftfahrzeugs und die Fahrzeugbatterie umgewandelt.

Die Fahrzeugbatterie kann für ein 42V-Bordnetz in Bleitechnik, Lithium-lonen-Technik, Nickel-Metallhydrid- oder Ultracap-Technik ausgestaltet sein.

Zum Kaltstart kann die Kupplung 9 von der Steuerungselektronikeinheit zunächst geöffnet und der Starter/Generator-Einheit Energie zugeführt werden um diese im Motorbetrieb zu betreiben. Hat der Rotor 8 eine ausreichend hohe Drehzahl erreicht, kann die Kupplung 9 geschlossen werden, was eine mechanische Kopplung zwischen dem Rotor 7 und der Kurbelwelle 2 zur Folge hat, so dass die Kurbelwelle 2 auf die Drehzahl des Rotors 8 'hochgerissen' wird. Ein Warmstart kann analog zum Kaltstart oder auch mit von Anfang an geschlossener Kupplung 9 durchgeführt werden.

Ein weiterer Vorteil bei Verwendung der in Fig. 1 gezeigten Kupplung 9 besteht darin, dass auch bei Stillstand des Verbrennungsmotors 1 eine Standklimatisierung möglich ist. Zu diesem Zweck wird die Kupplung 9 bei Stillstand des Verbrennungsmotors 1 gelöst, um die elektrische Maschine bzw. den Rotor 8 von dem Verbrennungsmotor 1 bzw. der Kurbelwelle 2 abzukuppeln. Anschließend wird die elektrische Maschine im Motorbetrieb betrieben, d. h. den Statorwicklungen 7 wird von der Leistungs- und Steuerungselektronikeinheit 11 elektrische Energie zugeführt, um den Rotor 8 in Drehung zu versetzen.

Die elektrische Maschine ist gemäß der sogenannten Außenläufer-Variante ausgestaltet, d. h. der Rotor 8 der elektrischen Maschine ist außerhalb der Statorwicklungen 7 drehbar gelagert. In diesem Fall kann ein Klimakompressor 10 direkt mit Hilfe eines Zahnkranzes 14, der über eine Verzahnung 13 mit dem Rotor 8 gekoppelt ist, angetrieben werden. Dabei ist eine Standklimatisierung möglich, wenn bei Stillstand des Verbrennungsmotors 1 die Kupplung 9 gelöst und die elektrische Maschine über die Batterie angetrieben ist.

Bei der gezeigten Ausführungsform soll die Kupplung 9 Schwingungsdämpfer und/oder Schwingungstilger beinhalten, um von der elektrischen Maschine bzw. deren Rotor 8 möglicherweise auf die Kurbelwelle 2 übertragene Schwingungen zu unterdrücken und einen ruhigen Betrieb des Generators zu ermöglichen.

## Patentansprüche

1. Antriebsvorrichtung, mit einem Antriebsaggregat (1), und mit einer elektrischen Maschine, welche mindestens einen Stator (7) und mindestens einen auf einer durch das Antriebsaggregat (1) verlaufende Antriebswelle (2) angeordneten Rotor (8) umfasst, wobei die elektrische Maschine (7, 8) an der Antriebswelle (2) auf der der Abtriebsseite gegenüberliegenden Seite des Antriebsaggregats (1) angeordnet ist,
**dadurch gekennzeichnet,**
**dass** die elektrische Maschine (7, 8) in der Außenläufer-Variante ausgestaltet ist, so dass der Rotor (8) der elektrischen Maschine außen um den Stator (7) herum drehbar ist, und dass der Rotor (8) an seiner Außenseite Drehmomentübertragungsmittel (13, 14) zur Übertragung seines Drehmoments auf eine mechanisch anzutreibende Einheit (10) aufweist.

2. Antriebsvorrichtung nach Anspruch 1, **dadurch gekennzeichnet, dass** das Antriebsaggregat (1) ein Verbrennungsmotor (1) und die Antriebswelle (2) eine Kurbelwelle des Verbrennungsmotor (1) ist, und
dass die mechanisch anzutreibende Einheit (10) eine Klimakompressoreinheit ist.

3. Antriebsvorrichtung nach einem der vorhergehenden Ansprüche, **dadurch gekennzeichnet, dass** die elektrische Maschine (7, 8) als Starter/Generator-Einheit ausgestaltet ist, welcher in einem ersten Betriebsmodus Energie zum Starten des Antriebsaggregats (1) zugeführt wird und welche in einem zweiten Betriebsmodus nach dem Starten des Antriebsaggregats (1) selber Energie zur Energieversorgung von elektrischen Verbrauchern liefert, und
dass der Rotor (8) der elektrischen Maschine über eine Kupplung (9) mit der Antriebswelle (2) gekoppelt ist.

4. Antriebsvorrichtung nach Anspruch 3, **dadurch gekennzeichnet, dass** eine Steuereinrichtung vorgesehen ist, welche in dem ersten Betriebsmodus die Kupplung (9) zunächst derart betätigt, dass die Verbindung zwischen dem Rotor (8) und der Antriebswelle (2) gelöst wird, und die Kupplung (9) erst schließt, wenn der Rotor (8) in dem ersten Betriebsmodus eine bestimmte Drehzahl erreicht hat und anschließend im ersten Betriebsmodus die Kupplung (9) geschlossen ist.

## Claims

1. Drive device with a drive unit (1) and an electrical machine, which comprises at least a stator (7) and at least a rotor (8) arranged on a drive shaft (2) running through the drive unit (1), in which the electrical machine (7, 8) is arranged on the drive shaft (2) on the side of the drive unit (1) opposite the drive side.
**characterised by** the fact
that the electrical machine (7, 8) is made in the external rotor version, so that the rotor (8) of the electrical machine can be turned externally around the stator (7) and the rotor (8) has a means of torque transfer (13, 14) on the outside to transfer its torque to a mechanical driving unit (10).

2. Drive device according to claim 1, **characterised by** the fact that the drive unit (1) is a combustion engine (1) and the drive shaft (2) is a crankshaft of the combustion engine (1) and
that the mechanical driving unit (10) is an air conditioning compressor unit.

3. Drive device according to one of the previous claims, **characterised by** the fact that the electrical machine (7, 8) is made as a starter/generator unit, which is supplied with power to start the drive unit (1) in a first operating mode and which itself supplies power for the power supply of electrical consumers in a second operating mode after the drive unit (1) has been started and
that the rotor (8) of the electrical machine is connected to the drive shaft (2) through a coupling (9).

4. Drive device according to claim 3, **characterised by the fact** that a control device is provided, which actuates the coupling (9) in the first operating mode so that the connection between the rotor (8) and the drive shaft (2) is broken and the coupling (9) only closes when the rotor (8) has reached a certain number of revolutions in the first operating mode and finally the coupling (9) is closed in the first operating mode.

## Revendications

1. Dispositif d'entraînement, avec un groupe d'entraînement (1) et avec une machine électrique, comprenant au moins un stator (7) et au moins un rotor (8), disposés sur un arbre d'entraînement (2) s'étendant à travers le groupe d'entraînement (1), la machine électrique (7, 8) étant disposée sur l'arbre d'entraînement (2), sur le côté, disposé à l'opposé du côté mené, du groupe d'entraînement (1),
**caractérisé en ce que**
la machine électrique (7, 8) est réalisée, en variante, à rotor extérieur, de sorte que le rotor (8) de la machine électrique est susceptible de tourner extérieurement autour du stator (7), et **en ce que** le rotor (8) présente, sur sa face extérieure, des moyens de transmission de couple (13, 14), pour transmettre son couple à une unité (10) à entraîner mécaniquement.

2. Dispositif d'entraînement selon la revendication 1, **caractérisé en ce que** le groupe d'entraînement (1) est un moteur à combustion (1) et l'arbre d'entraînement (2) est un vilebrequin du moteur à combustion (1), et
**en ce que** l'unité (10) à entraîner mécaniquement est une unité de compresseur de climatisation.

3. Dispositif d'entraînement selon l'une des revendications précédentes, **caractérisé en ce que** la machine électrique (7, 8) est réalisée sous la forme d'unité démarreur/générateur, à laquelle, en un premier mode de fonctionnement, est amenée de l'énergie pour démarrer le groupe d'entraînement (1) et qui, en un deuxième mode de fonctionnement, postérieur au démarrage du groupe d'entraînement (2), fournit elle-même de l'énergie pour l'alimentation en énergie de consommateurs électriques, et
**en ce que** le rotor (8) de la machine électrique est couplé à l'arbre d'entraînement (2) par un embrayage (9).

4. Dispositif d'entraînement selon la revendication 3, **caractérisé en ce qu'**un dispositif de commande est prévu, actionnant d'abord, lors du premier mode de fonctionnement, l'embrayage (9), de manière que la liaison entre le rotor (8) et l'arbre d'entraînement (2) soit couplée, et fermant ensuite l'embrayage (9) lorsque le rotor (8), au premier mode de fonctionnement, a atteint une vitesse de rotation déterminée, et l'embrayage (9) étant ensuite fermé, lors du premier mode de fonctionnement.
